# EUROPÄISCHE PATENTANMELDUNG

(11) **EP 0 922 627 A1**
(43) Veröffentlichungstag der Anmeldung: **16.06.1999**
(21) Anmeldenummer: 98122933.9
(22) Anmeldetag: 03.12.1998
(51) Int. Cl.: B62D 15/02, G01D 11/24, G01B 7/30

(54) **Modulare Anordnung eines Lenkwinkelsensors**

(30) Priorität: 06.12.1997 DE 19754191
(71) Anmelder: ITT MANUFACTURING ENTERPRISES, INC., Wilmington, Delaware 19801 (US)
(72) Erfinder: Benz, Jürgen, 74354 Besigheim (DE); Bayha, Heiner, 71739 Oberriexingen (DE)
(74) Vertreter: Dreiss, Fuhlendorf, Steimle & Becker, Patentanwälte

(57) **Zusammenfassung**

Die Erfindung betrifft ein Modulkonzept für einen vorzugsweise optisch arbeitenden Lenkwinkelsensor. Um einen vergleichsweise teuren Sensorkopf (6) für einen Lenkwinkelsensor nicht für alle Fälle vorleisten zu müssen, in der ein Lenkwinkelsensor nicht benötigt wird, wird vorgeschlagen, diesen Kopf wahlweise mit dem Gehäuse (3,4) des Lenkwinkelsensors rastend zu verbinden, so daß er auch leicht ausgetauscht werden kann. Um Platz zu sparen, empfiehlt es sich in Weiterbildung der Erfindung in einem sowohl einen Wickelfederverbinder (3) als auch einen Lenkstockschalter (4) umfassenden integrierten Gehäuse (3,4) an geeigneter Stelle den Sensorkopf dichtend einzufügen.

## Beschreibung

Die Erfindung betrifft einen Lenkwinkelsensor für Fahrzeuge, wie er beispielsweise für die Regelung der Fahrzeugdynamik benötigt wird.

Bekanntlich wird mit dem wachsenden Komfort von Kraftfahrzeugen die Anzahl der benötigten Komponenten immer größer, so daß man bestrebt sein muß, deren Abmessungen möglichst klein zu halten. Hinsichtlich Lenkwinkelsensoren wird dieses Problem beispielsweise in der US-PS 5 004 915 behandelt. Bei dem dort beschriebenen Lenkwinkelsensor wird ein in seinen Abmessungen vergleichsweise hoher Detektor an ein Gehäuse angefügt, welches die Codescheibe beherbergt. In der genannten Schrift wird vorgeschlagen, dieses Konzept aufzugeben und statt dessen die Sensorelemente gleichmäßig in einer zur Codescheibe parallelen Ebene zu verteilen.

Die Erfindung geht daher aus von einem Lenkwinkelsensor der sich aus dem Oberbegriff des Anspruchs 1 ergebenden Gattung. Aufgabe der Erfindung ist es, ein flexibles Modulkonzept vorzuschlagen, welches ebenfalls sehr raumsparend aufgebaut sein kann.

Die Aufgabe wird durch die sich aus dem kennzeichnenden Teil des Anspruchs 1 ergebenden Merkmalskombination gelöst. Die Erfindung besteht im Prinzip also darin, den Lenkwinkelsensor in den Bereich mit gehäuseumgebener Codescheibe und einen Sensorkopf aufzuteilen und den Sensorkopf nur im Bedarfsfalle mit dem Gehäuse zu verrasten. Auf diese Weise lassen sich erhebliche Ersparnisse erzielen, indem der vergleichsweise teure Sensorkopf nur dann an das vorgegebene Gehäuse der Codescheibe angefügt wird, wenn dies bei entsprechend vorgesehenen übergeordneten Systemen, beispielsweise einer Dynamikregelung, notwendig ist. Wird der Sensorkopf nicht benötigt, so steht auch der für den Kopf notwendige Raum für andere Zwecke zur Verfügung.

Eine besonders einfache Einbaumethode ergibt sich dadurch, indem die Merkmale nach Anspruch 2 angewendet werden. Hierbei wird der Sensorkopf vorzugsweise in der Ebene der Codescheibe radial in das Gehäuse eingefügt.

Vielfach ergibt sich das Problem, daß der Sensorkopf, insbesondere wenn die Codierungen in der Scheibenebene liegen und der Kopf somit die Scheibe von beiden Seiten umgreifen muß, dieser erheblich höher als das Gehäuse der Codescheibe ist. Um auch in diesen Fällen besonders Raum sparen zu können, zeigt die Merkmalskombination nach Anspruch 3 eine besonders vorteilhafte und raumsparende Weiterbildung. Nach dieser Merkmalskombination läßt sich der Sensorkopf besonders raumsparend einbauen, wenn das komplette Gehäuse über den Lenkwinkelsensor hinaus noch ein oder mehrere andere Baugruppen umfaßt, die ohnedies für eine entsprechende Gesamthöhe des integrierenden Gehäuses sorgen.

Vorteilhaft wird man die Baugruppen wählen, die ohnedies mit dem Lenkstock eines Fahrzeugs zusammenarbeiten, wie beispielsweise der Wickelfederverbinder (Uhrfederverbinder) und der Lenkstockschalter. Derartige Kombinationen sind beispielsweise in der Patentanmeldung 196 02 060.3 (P 8638) beschrieben. Die Weiterbildung besteht im Prinzip also im wesentlichen darin, in dem integrierenden Gesamtgehäuse in Hohe des Lenkwinkelsensors eine hinreichend große Öffnung vorzusehen, in die in radialer Richtung der Sensorkopf eingefügt wird. Wird der Lenkwinkelsensor nicht benötigt, so kann man diese Öffnung durch eine Kappe verschließen. Der Bedarf an einem Wickelfederverbinder sowie einem Lenkstockschalter wird in einem Fahrzeug regelmäßig gegeben sein. Die radiale Einfügung des Sensorkopfs ist dann besonders einfach, wenn die Codescheibe flach ist. Sie kann aber auch, wie aus der oben genannten Patentanmeldung bekannt ist, in ringförmige Ansätze an der Scheibe eingefügt sein, die senkrecht von der Scheibe und zu deren Drehachse zentriert, abstehen. Für diesen Fall ist es auch vorteilhaft möglich, den Sensorkopf in axialer Richtung in das Gehäuse einzufügen, beispielsweise von der Seite des Wickelfederverbinders her oder der Seite des Lenkstockschalters her.

Ein besonders einfacher Aufbau für den Sensorkopf des Lenkwinkelsensors ergibt sich aus der in Anspruch 5 aufgeführten Merkmalskombination. Obwohl die Erfindung für eine Vielzahl von Sensoren unterschiedlicher physikalischer Arbeitsweise geeignet ist, hat sich die in Anspruch 5 aufgeführte optisch arbeitende Konstruktion als besonders platzsparend und einfach erwiesen. Das Prinzip besteht dabei darin, daß man mit Hilfe der Trägerplatte und des Lichtleiters eine Gabel bildet, die die codierten Elemente umgreift, so daß alle Elemente zwar in einer Ebene befestigt sind, aber über den Lichtleiter eine zur Trägerplatte hin gerichtete Strahlung ermöglicht wird. In den Zwischenraum zwischen dem freien Lichtleiterende und der Trägerplatte ragen dann die optisch codierten Elemente, die durch die Strahlung des Lichtleiters beleuchtet werden und so ein Abbild des gerade vorliegenden, drehwinkelabhängigen Codierwertes auf dem Empfänger erzeugen, der ein entsprechendes Ausgangssignal abgibt.

Eine weitere Erhöhung der Flexibilität des Lenkwinkelsensors läßt sich dadurch erreichen, daß eine genormte Datenschnittstelle entsprechend der Merkmalskombination nach Anspruch 6 vorgesehen ist. Es ist hierdurch beispielsweise dann möglich, unterschiedliche Lenkwinkelsensoren je nach der geforderten Meßgenauigkeit einzusetzen. Insbesondere ist es auch dann der Fall, wenn als Empfänger auf dem Sensorkopf ein genormter CCD-Sensor verwendet wird, wie er beispielsweise in Naumann/Schröder, Bauelemente der Optik, Hauser-Verlag, München, 6. Auflage, Abschnitt 19.4 (Seite 554 ff.) erläutert ist. Die Merkmalskombination nach Anspruch 6 gibt auch eine Option für die Merkmale nach Anspruch 7. Es ist somit möglich, über den Anschluß als genormte Schnittstelle die Zentraleinheit eines Rechners abgesetzt von dem Sensorkopf an einer geeigneten Stelle im Gehäuse oder außerhalb des Gehäuses unterzubringen. Auf diese Weise kann die Zentraleinheit auch Aufgaben der Bewertung und des Austauschs von Daten übernehmen, die innerhalb der anderen Baugruppen des Gehäuses (Lenkstockschalter, Überwachung des Wickelfederverbinders und der daran angeschlossenen Elemente) benötigt wird.

Ein Ausführungsbeispiel der Erfindung wird nachfolgend anhand der Zeichnung erläutert. Darin zeigt:
- Fig. 1: das Konzept eines radialen Einschubs des Sensorkopfes in ein mehrere Baugruppen integrierendes Gehäuse,
- Fig. 2: die Prinzipskizze eines Sensorkopfes mit normierter Schnittstelle, an die eine an abgesetzter Stelle angeordnete Recheneinheit angeschlossen ist und
- Fig. 3: eine besonders einfache und kostensparende Ausgestaltung wesentlicher Bauteile des Sensorkopfes.

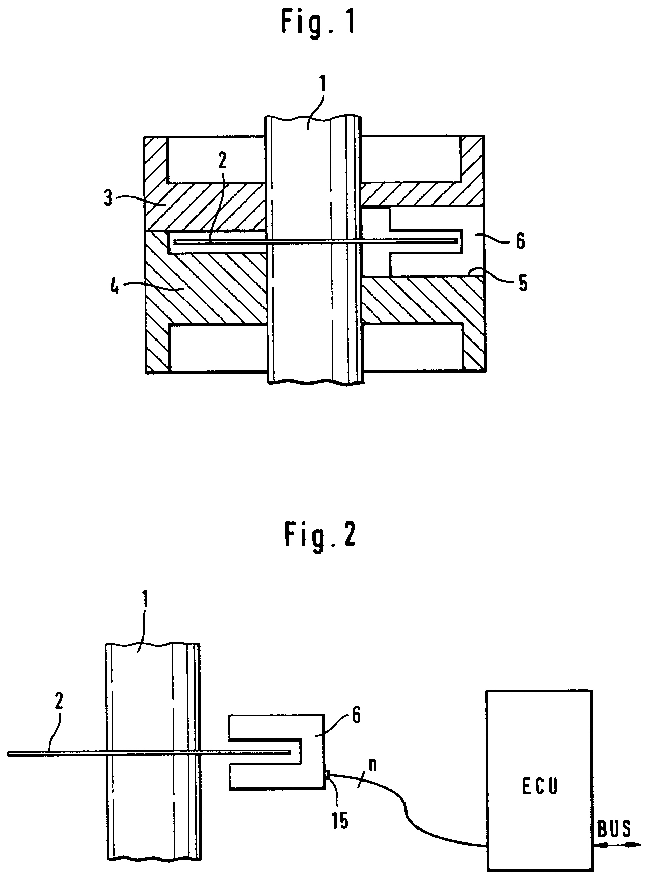

Fig. 1 zeigt den Lenkstock 1 bzw. die Lenkachse oder Lenksäule in herausgeschnittener Form eines Fahrzeugs, an die eine Codescheibe 2 angekoppelt ist. Die Codescheibe 2 folgt der Drehbewegung des Lenkstocks 1. An den gegenüber dem Fahrzeug festen Mantel des Lenkstocks 1 sind verschiedene Gehäuseteile angeflanscht, die zu unterschiedlichen an den Lenkstock angeordneten Baugruppen gehören. So bildet ein erster Gehäuseabschnitt 3 das untere Gehäuseteil eines Wickelfedergehäuses, während ein zweiter Gehäuseabschnitt 4 den oberen Gehäuseteil eines Lenkstockschalters bilden kann. Beide Gehäuseteile grenzen aneinander an und sind ggf. miteinander verbunden, wobei die Einbaumöglichkeit der Codescheibe nicht beschnitten werden darf. Für die Erfindung wichtig ist nun, daß innerhalb des die Gehäuseabschnitte 3 und 4 umfassenden Gesamtgehäuses eine Öffnung vorgesehen ist, in die der Sensorkopf 6 einsteck- bzw. aufsteckbar ist. In der Regel wird man die Öffnung 5 an die Stelle des Gesamtgehäuses 3, 4 liegen, an der hinsichtlich der zusätzlichen Baugruppen des Gesamtgehäuses noch ein Aufnahmeraum für den Sensorkopf gegeben ist. Aus der Skizze gemäß Fig. 1 ist ersichtlich, daß der für den Sensorkopf benötigte Raum hinsichtlich des Gesamtgehäuses 3,4 vergleichsweise gering ist, so daß das vorgeschlagene Konzept insbesondere für integrierte Gehäuse recht raumsparend wirkt. Hinsichtlich der Einzelheiten für die Gehäuseabschnitte wird ausdrücklich auf den Inhalt der oben genannten Patentanmeldung 196 02 060.3 verwiesen.

Fig. 2 zeigt einen Ausschnitt aus Fig. 1, wobei die Gehäuseabschnitte 3 und 4 der Einfachheit halber weggelassen wurden. Wichtig ist eine Schnittstelle 15 am Sensorkopf, über die mehrere parallele Datenübertragungsleitungen n den Sensorkopf 6 mit der räumlich abgesetzten Recheneinheit ECU verbinden. Von der ECU selbst kann ein gebräuchlicher Datenbus abgehen, wie er in neueren Fahrzeugen immer mehr angestrebt wird.

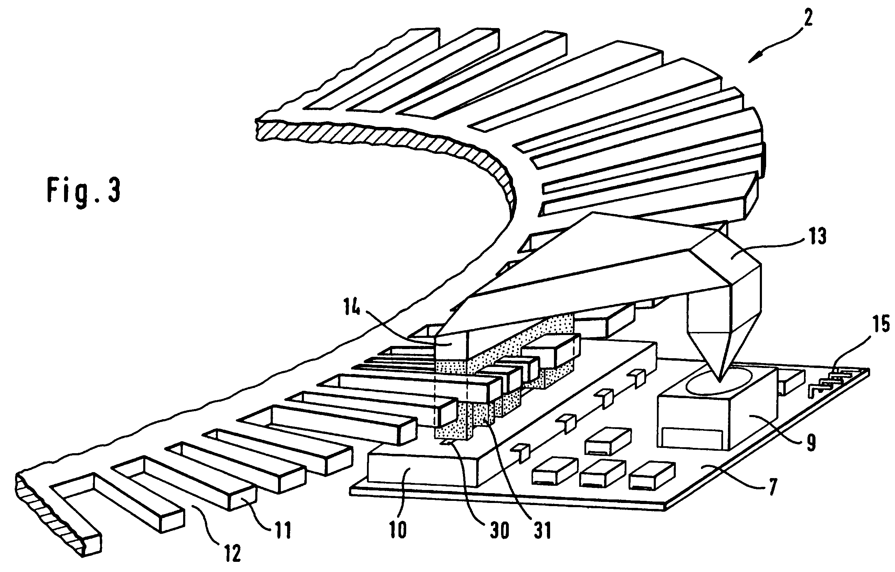

Fig. 3 zeigt ausschnittsweise und in perspektivischer Darstellung einen Abschnitt der Codescheibe 2, welche als Codierung Durchbrüche aufweist. Von der Codescheibe 2 ist nur herausgebrochen ein äußerer Bereich gezeigt, wobei die Folge und Breite der einzelnen Durchbrüche eine die Drehlage der Scheibe 2 beschreibende Codierung bilden. Einzelheiten hierzu lassen sich beispielsweise der US-PS 5 004 915 entnehmen. Für die Erfindung wichtig ist nun, daß auf dem als Leiterplatte ausgestalteten Träger innerhalb des Sensorkopfes sowohl eine beispielsweise als LED ausgestaltete Lichtquelle 9 als auch ein Empfänger aufgebracht ist, welcher beispielsweise als CCD-Zeile ausgestaltet sein kann. Die Lichtquelle wird durch eine LED 9 gebildet, während der Lichtempfänger als CCD-Zeile 10 ausgestaltet sein kann. Um nun die notwendige Lichtschranke bilden zu können, deren abschnittsweise Unterbrechung durch die Codeelemente 11 die Codierung auf der CCD-Zeile 30 über Strahlungsbündel 31 abgebildet wird, ist ein Lichtleiter 13 vorgesehen, der beispielsweise ein lichtleitender Kunststoffkörper sein kann. Dieser Lichtleiter führt das Licht der Lichtquelle 9 zu seinem freien Ende 14, von wo es in Richtung CCD-Zeile 10 abgestrahlt wird, so daß die Lichtschranke zwischen dem freien Ende 14 und der CCD-Zeile 10 gebildet wird. In diese Lichtschranke tauchen die Codeelemente 11,12 (Stege 11, Aussparungen 12) der Codescheibe 2 ein, so daß das Ausgangssignal der CCD-Zeile mehrere grade über der CCD-Zeile befindliche Codeelemente beschreibt, die in ihrer Folge ein Codewort bilden. Das gerade gelesene Codewort gibt somit einen Hinweis auf die Winkelstellung der Codescheibe.

Aus Fig. 3 ist noch eine elektrische Schnittstelle gezeigt, die als genormte Anschlußstelle ausgestaltet sein kann. An diese Anschlußstelle 15 ist dann, wie in Fig. 2 angedeutet, die Recheneinheit ECU anschließbar.

Die Erfindung läßt sich zusammenfassend daher kurz wie folgt beschreiben:

Die Erfindung betrifft ein Konzept zum Aufbau und zur Integration eines Sensors zur Positionserfassung rotatorischer Bewegungen. Der vorliegend gezeigte Sensor wird zur Erfassung des Lenkradwinkels eingesetzt. Für die beschriebene Winkelmessung lassen sich prinzipiell sämtliche physikalischen Meßprinzipien (optisch, ohmisch, induktiv, magnetisch, kapazitiv) verwenden, wobei im Ausführungsbeispiel ein optisches Meßverfahren beschrieben wird. Das Lenkwinkelsensorsystem gliedert sich dabei gemäß Fig. 2 in die Komponenten Codescheibe, Sensorkopf und Zentraleinheit ECU (electronic control unit). Wichtige Merkmale des vorliegenden Konzeptes ist die hohe erreichbare Modularität, insbesondere ist durch die Erfindung der Einbauort der ECU innerhalb des Lenkstockbereichs frei wählbar. Die ECU kann aber auch außerhalb des Lenkstockbereichs angeordnet sein. Hierdurch läßt sich die gegebene Raumsituation der Lenkstockeinheit sehr effizient nutzen. In dem Sensorkopf sind alle für die Abtastung der Codescheibe 2 erforderlichen Elemente enthalten. Für den beispielhaften Fall des optischen Sensorkopfes sind dies die Lichtquelle, der Empfänger (z.B. diskrete Fotoelemente, Opto-ASIC, insbesondere CCD-Sensor) und die signalvorverarbeitende Elektronik. Zur einfachen Montage des Sensorkopfes bietet sich eine präzis arbeitende Einrastvorrichtung in dem Lenkstockmodul, insbesondere in dessen Gehäuse, an. Je nach Ausstattung des Fahrzeugs wird der Sensorkopf dann wahlweise z.B. in radialer Richtung eingesteckt und mit dem Gehäuse verrastet.

Die Zentraleinheit (ECU) zur Auswertung der Sensorinformation und zur Berechnung des Lenkwinkels kann je nach Struktur des Lenkstockmoduls an geeigneter Stelle untergebracht werden. Für die Verbindung von ECU und Sensorkopf liegt bei Verwendung eines CCD-Sensors eine definierte Schnittstelle vor, für die nur wenige Leitungen erforderlich sind. Für weitere Funktionen im Lenkstockmodul (z.B. Transponder-Elektronik) kann die Lenkwinkelsensor-ECU in diese Elektronik integriert bzw. die Funktion der Zusatzgeräte von der Zentraleinheit des Lenkwinkelsensors übernommen werden. Die ECU kann im Bedarfsfalle an das Kfz-Bussystem angebunden werden.

Als konstruktive, platzsparende Lösungsmöglichkeit für die Einbettung des Sensorkopfes im Lenkstockmodul kann die Lösung nach Fig. 1 dienen. Hier wird die Codescheibe direkt auf die Lenkachse montiert, wobei sie alternativ getrennt gelagert und über eine Mitnahme mit dem Lenkrad gedreht werden kann. Der Sensorkopf umschließt die Codescheibe und ist zwischen Gehäuseteil von Wickelfeder und Lenkstockschalter eingebettet. Der Sensorkopf wird in diesem Beispiel radial aufgesteckt und z.B. rastend in der richtigen Position gehalten. Vorteilhaft ist dabei, daß nur an einer Stelle für den Sensorkopf Platz zur Verfügung gestellt werden muß. Wie bereits erwähnt, lassen sich bei dem optischen Drehwinkelmeßverfahren nur Techniken verwenden, die eine Reduzierung der Schmutzempfindlichkeit gewährleisten. Da sich bei optischen Systemen keine absolute Unempfindlichkeit gegenüber Staub, Feuchtigkeit usw. erreichen läßt, muß das einsetzbare Lenkstockmodul in bezug auf die Codescheibe und den Sensorkopf eine kapselnde bzw. schließende Funktion haben.

In Fig. 3 ist beispielhaft eine Prinzipdarstellung eines Sensorkopfes gezeigt. Wesentliche Elemente dabei sind die Lichtquelle, z.B. IR-LED, und die optische Zeile. Beide optischen Elemente sind auf einer Platine aufgebracht, welche die erforderliche Zusatzelektronik erhält. Zur Platzeinsparung wird zur direkten Beleuchtung des Zeilensensors ein Lichtleiter verwendet. Gemäß dem Durchlichtprinzip wird dabei die Codierung der Codescheibe auf die fotosensitive Zeile abgebildet. Der vorzugsweise aus Kunststoff bestehende Lichtleiter ist so ausgeführt, daß er den optischen Zeilensensor homogen mit möglichst parallelem Licht ausleuchtet. Der Lichtleiter wird hierbei direkt auf der Platine montiert. Er kann aber auch in eine andere oberhalb des Sensorkopfes bestehende Lenkstockeinheit wie beispielsweise den Wickelfederverbinder bzw. dessen Gehäuse integriert sein.

Über die elektrische Schnittstelle kommuniziert der Sensorkopf mit der bezüglich des zur Verfügung stehenden Platzes an geeigneter Stelle untergebrachten ECU. Realisiert werden kann die elektrische Verbindung über einen direkt am Sensorkopf befestigten Kabelschwanz, aber auch über eine Steckverbindung oder vorzugsweise über Kontakte, die bei Einrastung des Sensorkopfes in das Gehäuse die Verbindung herstellen. Der gesamte Sensorkopf wird somit in ein Gehäuse integriert. Dabei wird er vorzugsweise über Führungsschienen in das Lenkstockmodul eingesteckt bzw. über eine Einrastung fixiert.

## Patentansprüche

1. Lenkwinkelsensor mit einer durch den Lenkstock (1) eines Fahrzeugs antreibbaren Codescheibe (2) und einem Sensorkopf (6), welcher ein mit der Drehlage der Codescheibe (2) sich änderndes Signal (15) abgibt, wobei der Sensorkopf (6) mit einem Gehäuse (3,4) verbindbar ist, indem er zumindest teilweise in eine Öffnung (5) des Gehäuses eintaucht und dabei die Öffnung im wesentlichen verschließt, dadurch **gekennzeichnet**, daß der Sensorkopf (6) mit dem Gehäuse (3,4) verrastbar ist.

2. Lenkwinkelsensor nach Anspruch 1, dadurch **gekennzeichnet**, daß der Sensorkopf (6) in zur Codescheibe (2) radialer Richtung in das Gehäuse (3,4) einschiebbar ist.

3. Lenkwinkelsensor nach einem der vorangegangenen Ansprüche, dadurch **gekennzeichnet**, daß das Gehäuse (3,4) zumindest durch Gehäuseabschnitte (3,4) wenigstens eines weiteren am Lenkstock angeordneten Gerätes (z.B. Wickelfederverbinder, Lenkstockschalter) gebildet ist.

4. Lenkwinkelsensor nach Anspruch 3, dadurch **gekennzeichnet**, daß die Gehäuse des Wickelfederverbinders (3) und des Lenkstockschalters (4) ineinander integriert sind.

5. Lenkwinkelsensor nach einem der vorangegangenen Ansprüche, dadurch **gekennzeichnet**, daß der Sensorkopf (6) mit einem Träger (7) versehen ist, auf den auf im wesentlichen der gleichen Ebene eine Lichtquelle (9) und ein optischer Detektor (10), insbesondere CCD-Detektor, die CCD-Zeile angeordnet sind und daß ein Lichtleitkörper (13) vorgesehen ist, welcher Strahlung der Lichtquelle (9) auf einen oberhalb des optischen Detektors (10) liegenden Bereich leitet, wobei die Scheibe in den Zwischenraum zwischen dem sendenden Ende des Lichtleitkörpers und des Detektors (10) ragt.

6. Lenkwinkelsensor nach Anspruch 5, dadurch **gekennzeichnet**, daß der Träger (7) mit einer für den Austausch von Daten genormten Schnittstelle (15) versehen ist.

7. Lenkwinkelsensor nach einem der vorangegangenen Ansprüche, dadurch **gekennzeichnet**, daß an die Anschlußstelle (15) ein eine Rechnerzentraleinheit (ECU) angeschlossen ist, die abgesetzt an geeigneter Stelle innerhalb oder außerhalb des Gehäuses (3,4) angeordnet ist.

8. Verwendung eines Lenkwinkelsensors nach einem der vorangegangenen Ansprüche 1 bis 7, dadurch **gekennzeichnet**, daß er in ein integriertes Lenkstockmodul eingefügt ist, welches einen Wickelfederverbinder (3) und einen Lenkstockschalter (4) umfaßt.

9. Lenwinkelsensor nach Anspruch 5 oder einem der folgenden Ansprüche, dadurch **gekennzeichnet**, daß der Lichtleitkörper in eine oberhalb des Sensorskopfes angeordnete Lenkstockeinheit, insbesondere Wickelfederverbinder eingefügt ist.

10. Lenkwinkelsensor nach einem der vorangegangenen Ansprüche, dadurch **gekennzeichnet**, daß der Sensorkopf durch das Einrasten in das Gehäuse über Steckverbindungen elektrisch angeschlossen wird.
